# EUROPÄISCHE PATENTSCHRIFT

(11) **EP 1 646 775 B1**
(45) Veröffentlichungstag und Bekanntmachung des Hinweises auf die Patenterteilung: **15.02.2012**
(21) Anmeldenummer: 04766231.7
(22) Anmeldetag: 15.07.2004
(51) Int. Cl.: F02C 7/143

(54) **VERFAHREN ZUM BETRIEB EINER LUFTATMENDEN KRAFTMASCHINE**
METHOD FOR THE OPERATION OF AN AIR-BREATHING ENGINE
PROCEDE POUR FAIRE FONCTIONNER UNE MACHINE MOTRICE AEROBIE

(30) Priorität: 22.07.2003 DE 10333208
(43) Veröffentlichungstag der Anmeldung: 19.04.2006
(73) Patentinhaber: Alstom Technology Ltd, 5400 Baden (CH)
(72) Erfinder: JIMENEZ HAERTEL, Carlos, 81247 München (DE); SAVIC, Sasha, CH-5430 Wettingen (CH)
(86) Internationale Anmeldenummer: PCT/EP2004/051502
(87) Internationale Veröffentlichungsnummer: WO 2005/008044

(56) Entgegenhaltungen:
- WO-A-2004/025102
- US-A- 5 867 977
- US-A1- 2001 022 078
- US-A1- 2003 029 157
- US-B1- 6 318 066

## Beschreibung

### Technisches Gebiet

Die vorliegende Erfindung betrifft ein Verfahren zum Betrieb einer Kraftmaschine gemäss dem Oberbegriff des Anspruchs 1.

### Stand der Technik

Aus dem Stand der Technik sind Verfahren bekannt, die Leistungsdaten von Kraftmaschinen mit innerer Verbrennung, beispielsweise einer Gasturbogruppe, durch Verdunstungskühlung vor und /oder während der Verdichtung der Verbrennungsluft positiv zu beeinflussen. Dazu wird üblicherweise Wasser oder eine sonstige Flüssigkeit in fein zerstäubter Form in den angesaugten Gasstrom eingedüst. Bereits in der FR 1 563 749 wurde die überragende Bedeutung der Zerstäubungsgüte und der homogenen Verteilung der eingebrachten Flüssigkeit erkannt. Die Tropfengrösse hat unmittelbaren Einfluss auf das Strömungsfolgevermögen und die Verdunstungszeit der Tropfen. Beim Eintritt von Tropfen in einen Turboverdichter steigt mit der Tropfengrösse die Anzahl der Tropfen, die auf Verdichterschaufeln auftreffen, und deren potenziell erosiver Effekt. Das heisst, wenn die Tropfengrösse einen bestimmten Grenzwert überschreitet, wachsen die negativen Effekte überproportional stark an. Die US 6,216,443 gibt daher an, in den Verdichter einer Gasturbogruppe Tropfen mit einer Grösse von 1 bis 50 µm Durchmesser einzudüsen. Diese Grösse hängt von einer Vielzahl unterschiedlicher Parameter wie unter Anderem Düsengeometrie, Zerstäubungsdruck, oder den Strömungsverhältnissen nach der Zerstäubung ab. Im Langzeitbetrieb unterliegen diese Parameter potenziellen Veränderungen: Erosion oder Verstopfung von Zerstäuberdüsen sind nur einige der Vorgänge, welche die Zerstäubungscharakteristik einer Eindüsungsvorrichtung nachhaltig zu verändern vermögen.

Aus US 2001/002078 und WO 2004/025102 sind Verfahren bekanntgeworden, bei dem ein Flüssigkeitsmassenstrom zerstäubt in den Luftansaugkanal einer Kraftmachine eingedüst wird. Mittels strom ab der Eindüsung angeordneten Sensoren wird die Eindüsung im geschlossenen Regelkreis betrieben, und der eingedüste Massenstrom zum Erreichen eines Sollwertes der Messwerte eingestellt. Die dabei gemessenen Grössen geben aber auch keine Aussage über die Zerstäubangscharakteristik.

### Darstellung der Erfindung

Hier will die Erfindung Abhilfe schaffen. Der in den Ansprüchen gekennzeichneten Erfindung liegt die Aufgabe zugrunde, ein Verfahren der eingangs genannten Art anzugeben, welches die Nachteile des Standes der Technik zu vermeiden vermag. Insbesondere sollen potenziell negative Auswirkungen einer Abweichung der Flüssigkeitseinspritzung von ihrem Auslegungspunkt vermieden werden.

Erfindungsgemäss wird diese Aufgabe unter Verwendung der Gesamtheit der Merkmale des Anspruchs 1 gelöst.

Kern der Erfindung ist es also, die Flüssigkeitseindüsung in einem geschlossenen Regelkreis zu betreiben, wobei eine Eigenschaft des erzeugten Sprays, beispielsweise dessen Tropfengrösse ober Tropfengrössenspektrum, als Leitgrösse herangezogen wird. Kern der Erfindung ist es demnach, wesentliche Parameter, in erster Linie also die Tropfengrösse respektive das Tropfengrössenspektrum und/oder die Tropfenkonzentration des erzeugten Flüssigkeitsnebels messtechnisch zu erfassen, und die so gewonnenen Messwerte in die Betriebsregelung der Flüssigkeitseindüsung einfliessen zu lassen, um damit beispielsweise Schutzeingriffe beim Überschreiten von Grenzwerten vorzunehmen, oder Ist-Werte der gemessenen Parameter auf Sollwerte oder in Sollwert-Intervalle einzuregeln. Es ist sehr von Vorteil, ein Toleranzband um den Sollwert festzulegen. Die Festlegung eines Toleranzbandes um den Sollwert, oder aber auch eines Regelungs-Totbandes um einen aktuellen Wert, verhindert ein übernervöses Agieren des so realisierten geschlossenen Regelkreises, welches ansonsten eine potentielle Quelle für Regelkreis-Instabilitäten darstellt. Der Sollwert oder das Sollwertintervall können dabei variabel festgelegt werden, in dem Sinne, dass die Sollwerte oder Sollwertintervalle beispielsweise als Funktion des aktuellen Maschinen-Betriebszustandes festgelegt werden. In einer Ausführungsform des erfindungsgemässen Verfahrens werden die Tropfengrösse und fakultativ die Konzentrationsverteilung in Abhängigkeit vom eingespritzten Flüssigkeitsmassenstrom zu einem Referenzzeitpunkt, insbesondere im Neuzustand der Eindüsungsvorrichtung, aufgenommen, und als Sollwerte festgelegt. Eine Ist-Sollwert-Abweichung beispielsweise der Tropfengrösse, die einen bestimmten Betrag überschreitet, kann dann als Mass für einen Verschleiss herangezogen werden.

Eine Betriebssteuerung der Eindüsungsvorrichtung ist in der Regel ohnehin vorhanden, um deren Betriebsparameter, wie beispielsweise den eingedüsten Massenstrom oder den Zerstäubungsvordruck zu steuern und/oder in einem vorgegebenen Sollband zu halten.

Es versteht sich von selbst, dass die Anordnung der Messstelle im oder am Ansaugkanal stromab der Zerstäubungsvorrichtung erfolgen muss.

In einer Ausführungsform der Erfindung werden Messwerte an mehreren Stellen des Ansaugkanals, insbesondere über dessen Querschnitt verteilt, aufgenommen. In einer weiteren Ausführungsform werden integrierende Messverfahren eingesetzt, welche Mittelwerte über ein bestimmtes Messfeld liefern. Beispielsweise werden mit Hilfe von Durchlichttechniken Mittelwerte über den durchleuchteten Bereich ermittelt. Auch in diesem Falle ist es wiederum möglich, Messungen an mehreren Orten und unter unterschiedlichen Winkeln simultan aufzunehmen, und mittels tomographischer Methoden die lokale Verteilung zu rekonstruieren.

In einer Ausführungsform der Erfindung, welche besonders beim Einsatz von Druckzerstäubern geeignet ist, wird in Abhängigkeit von den Messwerten der Zerstäubungs-Vordruck der Flüssigkeit verändert, und insbesondere wird bei einer negativen Sollwert-Istwert-Abweichung der Tropfengrösse der Vordruck erhöht und bei einer positiven Sollwert-Istwert-Abweichung der Tropfengrösse der Vordruck vermindert. Die Sollwert-Istwert-Abweichung wird dabei definiert, indem der Istwert vom Sollwert subtrahiert wird; eine negative Sollwert-Istwert-Abweichung oder Regelabweichung bedeutet demnach, dass der Istwert der Tropfengrösse grösser als der Sollwert ist, und eine positive Sollwert-Istwert-Abweichung oder Regelabweichung bedeutet, dass der Istwert kleiner als der Sollwert ist. Der beschriebene Regeleingriff geht damit einher, dass entweder gleichzeitig der Massenstrom der zerstäubten Flüssigkeit verändert wird, oder zu dessen Konstanthaltung die Geometrie oder die Anzahl der Zerstäuberdüsen verändert werden muss. So kann einerseits bei einer negativen Regelabweichung der Tropfengrösse der Durchtrittsquerschnitt der Zerstäuberdüsen verringert und bei einer positiven Regelabweichung der Tropfengrösse der Durchtrittsquerschnitt der Zerstäuberdüsen vergrössert werden. Der Durchtrittsquerschnitt kann beispielsweise verändert werden, indem konische Innenkörper unterschiedlich weit in die Zerstäuberöffnung eingefahren werden. Der Effekt kann weiterhin erzielt werden, indem selektiv Düsen und/oder Düsengruppen zu- oder abgeschaltet werden, derart, dass bei einer negativen Regelabweichung der Tropfengrösse Düsen und/oder Düsengruppen abgeschaltet werden, und umgekehrt bei einer positiven Regelabweichung der Tropfengrösse selektiv Düsen und/oder Düsengruppen zugeschaltet werden. In einer anderen Ausführungsform der Erfindung verfügt die Vorrichtung, welche zur Eindüsung der Tropfen verwendet wird, über Düsen und/oder Düsengruppen mit unterschiedlichen Zerstäubungseigenschaften, derart, dass ein Teil der Düsen für eine feinere Zerstäubung vorgesehen ist, und ein anderer Teil der Düsen für eine weniger feine Zerstäubung; hier kann der Durchmesser der Tropfen durch Umschalten zwischen den Düsen und/oder Düsengruppen in einem Sollwertintervall oder in einem Toleranzband um einen Sollwert gehalten werden.

Die selektive Umschaltung zwischen Düsen und/oder Düsengruppen kann selbstverständlich auch auf andere Weise erfolgen. Wenn die Messung der Tropfengrösse und insbesondere der Tropfenkonzentration an unterschiedlichen Stellen im Ansaugkanal erfolgt, so können an unterschiedlichen Stellen über den Querschnitt des Ansaugkanals angeordnete Düsen und/oder Düsengruppen zu- und/oder abgeschaltet werden, um ein vorgegebenes Konzentrationsprofil zu erreichen, insbesondere eine näherungsweise Gleichverteilung von Tropfengrösse und -konzentration über dem Querschnitt des Ansaugkanals.

Bei der Verwendung von Zerstäubern mit Hilfsmedien, insbesondere luftunterstützte Zerstäuber, kann,. ohne im Wesentlichen auf den Flüssigkeitsmassenstrom Einfluss zu nehmen, die Grösse der zerstäubten Tropfen durch eine Variation des Druckes des Hilfsmediums variiert und auf den Sollwert eingeregelt werden.

Eine andere Möglichkeit, die Tropfengrösse zu steuern, besteht darin, der zu zerstäubenden Flüssigkeit Additive zuzumischen, durch welche die Oberflächenspannung beeinflusst wird. Wenn die zu zerstäubende Flüssigkeit also Wasser ist, so kann beispielsweise durch die Zugabe seifenartiger Additive die Oberflächenspannung reduziert werden. Um also bei einem Istwert der Tropfengrösse, welche grösser ist als der Sollwert, kleinere Tropfen zu erzielen, kann einfach eine Menge des zudosierten die Oberflächenspannung senkenden Additivs erhöht werden, und umgekehrt.

In einer vorteilhaften Ausführungsform der Erfindung wird beim Überschreiten einer bestimmten Tropfengrösse oder beim Überschreiten einer bestimmten Abweichung des Konzentrationsprofils vom Soll-Profil die Flüssigkeitseindüsung abgeschaltet. Wenn die spezifizierten Daten nicht mehr eingehalten werden können, bedeutet dies eine latente Gefährtdung der Kraftmaschine, beispielsweise eines stromab angeordneten Turboverdichters einer Gasturbogruppe, und es gibt einen deutlichen Hinweis auf Beschädigungen oder übermässigen Verschleiss der Einspritzvorrichtung, beispielsweise aufgrund von Erosion der Einspritzdüsen. Die Regelung wird dann also als Sicherheitseinrichtung oder als sogenannter Grenzregler betrieben.

Optische Methoden erweisen sich bei der Durchführung des erfindungsgemässen Verfahrens als besonders geeignete Messmethoden. Dabei können sowohl Durchlicht- als auch Streulichtmessverfahren verwendet werden. Insbesondere erweisen sich Streulichtmessverfahren als geeignet, welche Streulicht nahe der Vorwärtsrichtung aufnehmen. Beispielsweise kann ein dem Fachmann ohne weiteres geläufiges Partikelgrössenmessgerät, beispielsweise in der Art des am Markt verfügbaren Malvern Particle Sizer, verwendet werden. Ebenso ist ein billig zu realisierendes Mehrwellenlängen-Extinktionsverfahren vorteilhaft einzusetzen, welches bei geeigneter Auslegung wenigstens die Tropfenkonzentration und -grösse sowie die Verteilungsbreite der Tropfengrösse zu ermitteln vermag. Weiterhin können Bildauswerteverfahren verwendet werden, die beispielsweise als stereoskopische Video-Aufnahmen oder mit ortsselektiver Beleuchtung eine lokal auflösende Messung erlauben.

Durchlichtmessverfahren beispielsweise liefern im Allgemeinen Mittelwerte über den gesamten durchleuchteten Bereich. Es ist dabei auch möglich, durch den Einsatz tomografischer Methoden eine lokale Auflösung zu rekonstruieren.

Weitere vorteilhafte Ausführungsformen der Erfindung erschliessen sich im Lichte der Unteransprüche und der nachfolgend beschriebenen Ausführungsbeispiele.

### Kurze Beschreibung der Zeichnung

Die Erfindung wird nachfolgend anhand von in der Zeichnung illustrierten Ausführungsbeispielen näher erläutert. Im einzelnen zeigen:
Figur 1 eine erfindungsgemäss betreibbare Gasturbogruppe;
Figuren 2 bis 5 Beispiele für erfindungsgemäss zu realisierende Regelkreise.

Für das Verständnis der Erfindung nicht unmittelbar notwendige Elemente sind weggelassen. Die Ausführungsbeispiele sind rein instruktiv zu verstehen, und sollen nicht zu einer Einschränkung der in den Ansprüchen gekennzeichneten Erfindung herangezogen werden.

### Weg zur Ausführung der Erfindung

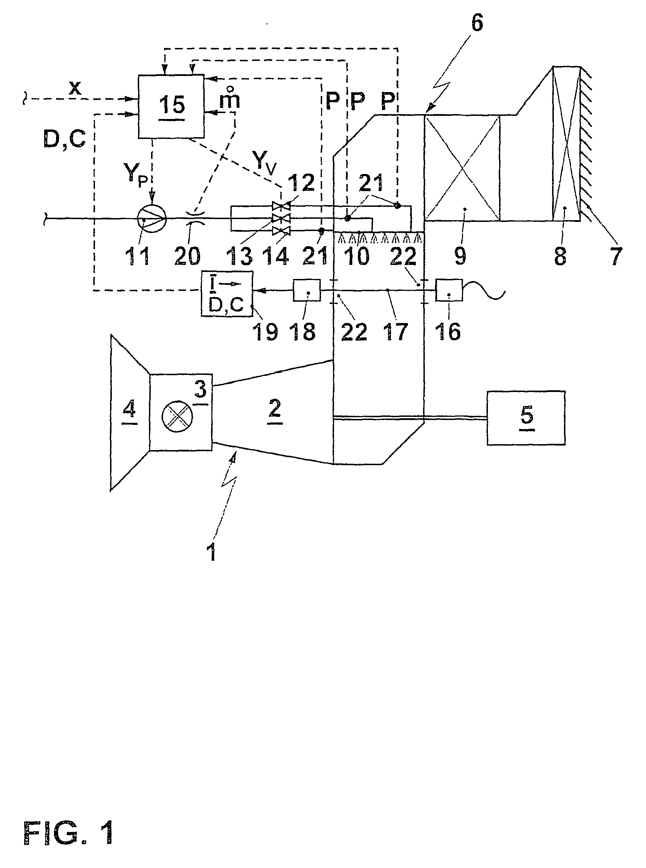

Gemäss Figur 1 umfasst eine Gasturbogruppe 1 einen Verdichter 2, eine Brennkammer 3, sowie eine Turbine 4. Mit einer Nutzleistung wird beispielsweise über eine Welle (angedeutet ohne Bezugszeichen) eine Last, beispielsweise Generator 5, angetrieben. Der Verdichter 2 saugt Luft aus der Umgebung an, welche verdichtet und in die Brennkammer 3 geleitet wird, wo ein gespanntes Heissgas erzeugt wird, welches in der Turbine 4 arbeitsleistend entspannt wird. Gasturbinen und andere luftatmende Kraftmaschinen werden in vielen Anwendungen mit speziellen Ansaugwegen ausgestattet, welche es erlauben, einen definierten Ort des Lufteintritts zu wählen und die Ansaugluft gegebenenfalls aufzubereiten. Die in Figur 1 dargestellte Gasturbogruppe weist stromauf des Verdichtereintritts einen Ansaugkanal 6 auf, der von der angesaugten Luft durchströmt wird. Dieser umfasst Eintrittslamellen 7, welche die Aufgabe haben, den Eintritt von grobem Schmutz insbesondere Regenwasser zu vermeiden. Daran schliessen sich stromab ein Luftfilter 8 und ein Schalldämpfer 9 an. Stromab des Schalldämpfers 9 ist eine Eindüsungsvorrichtung 10 angeordnet, mit welcher eine Flüssigkeit, beispielsweise Wasser, in Form eines feinen Sprühnebels in den Ansaugkanal eingedüst werden kann. Die eingebrachten Wassertropfen verdunsten, je nach Anordnung der Eindüsungsvorrichtung und der Feuchte der angesaugten Luft, teilweise vor dem Verdichter und kühlen somit die Ansaugluft, was zu einer Erhöhung der Luftdichte und bei sonst konstanten Bedingungen zu einer Erhöhung des Luftmassenstroms der Gasturbogruppe führt. Wenn sehr viel Flüssigkeit eingedüst wird, dringen Wassertropfen in den Verdichter ein, verdunsten während der Verdichtung, und bewirken damit eine intensive Innenkühlung des Verdichters, mit positiven Auswirkungen auf die Leistungsdaten der Gasturbogruppe. Wie eingangs erwähnt, ist es bei Anwendung dieses Verfahrens bedeutsam, eine feine Zerstäubung und eine gleichmässige Verteilung des Flüssigkeitsnebels im Ansaugkanal zu erreichen. Insbesondere die Gewährleistung der Zerstäubungsgüte ist von herausragender Bedeutung, da mit zunehmender Tropfengrösse das Strömungsfolgevermögen der Tropfen sinkt, und die potenzielle erodierende Wirkung auf die Verdichterkomponenten zunimmt. Es ist damit wünschenswert, die Unterschreitung eines zulässigen Maximalwertes des Tropfendurchmessers durch eine Betriebsmessung zu verifizieren, und gegebenenfalls mit Regeleingriffen entsprechend auf die Zerstäubung einzuwirken. Eine zu feine Zerstäubung andererseits ist sehr energieaufwändig, und speziell wenn Druckzerstäuber eingesetzt werden steigt mit sinkendem Tropfendurchmesser die erosive Wirkung der Flüssigkeit auf die Zerstäuberdüsen an. Zudem beeinflusst die Tropfengrösse massgeblich die Verdunstungsgeschwindigkeit und damit die Eindringtiefe eines Tropfens in den Verdichter. Aus diesen Gründen ist es wünschenswert, die Tropfengrösse, zweckmässig auch als Mittelwert, oder das Tropfengrössenspektrum in Echtzeit zu erfassen und eine Regelung auf ein Sollwertintervall vorzunehmen. Gegebenenfalls ist es auch wichtig, die Verteilung der Tropfenkonzentration über dem Querschnitt des Strömungskanals aufzunehmen, und diese auf ein vorgegebenes Soll-Konzentrationsprofil, beispielsweise eine Gleichverteilung, einzustellen. Die Eindüsungsvorrichtung 10 wird von einer Pumpe 11 mit Flüssigkeit versorgt. Der Flüssigkeitsmassenstrom wird über Absperr- und/oder Drosselorgane 12,13,14 auf unterschiedliche Düsen und/oder Düsengruppen der Eindüsungsvorrichtung verteilt. Eine Steuereinheit 15 dient zur Steuerung des Betriebes der Eindüsungsvorrichtung. Im einfachsten, nach dem Stand der Technik geläufigen Betriebsverfahren erhält die Steuereinheit 15 eine oder mehrere Steuergrössen X von der nicht dargestellten und auch nicht erfindungsrelevanten Steuereinrichtung der Gasturbogruppe, und berechnet Steuergrössen Y_{P} und Y_{V} zur Ansteuerung der Pumpe 11, respektive der Absperr- und/oder Drosselorgane 12, 13, 14, so, dass das System in einer offenen Steuerkette betrieben wird. In einer ersten Weiterentwicklung umfasst das System eine Massenstrommessstelle 20 und Druckmessstellen 21, welche eine Rückmeldung des Massenstroms m sowie des Druckes p, vorzugsweise des Zerstäubungsvordruckes, liefert. Mit Hilfe einer derartigen Rückmeldung können zwar Massenstrom und Drücke in einem geschlossenen Regelkreis auf Sollwerte eingeregelt werden, womit jedoch noch keine unmittelbare Aussage über die Tropfengrösse und -konzentration getroffen ist. Erfindungsgemäss ist daher eine Messvorrichtung zur Bestimmung der Tropfengrösse und/oder - konzentration angeordnet. Diese umfasst im Ausführungsbeispiel eine Lichtquelle 16, einen Empfänger 18, und eine Auswerteeinheit 19. Ausgehend von der Lichtquelle 16 durchstrahlt ein Messstrahl 17 den Strömungskanal mit dem Flüssigkeitsnebel. Der optische Zugang ist durch Fenster 22 realisiert. Das Licht wird von dem Flüssigkeitsnebel gestreut, und, im Falle von Wasser und sichtbarem Licht zu einem vernachlässigbaren Teil, absorbiert. Der Empfänger 18 nimmt die transmitterte Restintensität und/oder Streulicht, bevozugt unter verschiedenen Winkeln, auf. Wenn genügend Messwerte erfasst werden, können die Tropfengrösse D, wenigstens als Mittelwert, und sukzessive auch die Konzentration C der Tropfen in der Auswerteeinheit 19 aus den Messsignalen bestimmt werden. Derartige optische Messverfahren sind dem Fachmann geläufig, beispielsweise das Malvern-Messgerät oder Mehrwellenlängen-Extinktionsmessungen, welche gegebenenfalls auch Informationen über die Verteilungsbreite des Tropfengrössenspektrums erlauben. Es ist auch ohne Weiteres möglich, dass der Empfänger oder mehrere Empfänger 18 nicht koaxial mit der Lichtquelle oder mit mehreren Lichtquellen 16 und dem Messstrahl angeordnet ist, und dann nur Streulicht unter bestimmten Winkeln aufgenommen wird. Wenn genügend Messsignale aufgenommen werden, kann aus den gemessenen Intensitätsmesswerten I in der Auswerteeinheit 19 die Tropfengrösse D und/oder die Tropfenkonzentration C berechnet werden. Auch andere dem Fachmann geläufige Verfahren ausser Streu- und/oder Durchlichtmessverfahren können zur Bestimmung der Tropfengrösse und/oder -konzentration eingesetzt werden. Diese Grössen werden sodann an die Steuereinheit 15 weitergegeben, welche die so bestimmten Werte, in erster Linie also die Tropfengrösse und/oder - konzentration an einer Messposition, gegebenenfalls aber auch ein gemessenes Tropfengrössenspektrum und/oder die Verteilung der Tropfengrösse und/oder der Konzentration über dem Strömungskanalquerschnitt mit Sollwerten oder Sollwertintervallen vergleicht, und gegebenenfalls geeignete Regeleingriffe durchführt, um die gemessenen Ist-Werte wieder mit den Soll-Werten zur Deckung zu bringen.

Die Einstellung der Tropfengrösse bei luftunterstützten Zerstäubern oder mit anderen Hilfsmedien arbeitenden Zerstäubern kann dabei bevorzugt durch eine Variation des Druckes des Hilfsmediums, also beispielsweise des Zerstäuberluftdruckes, erfolgen.

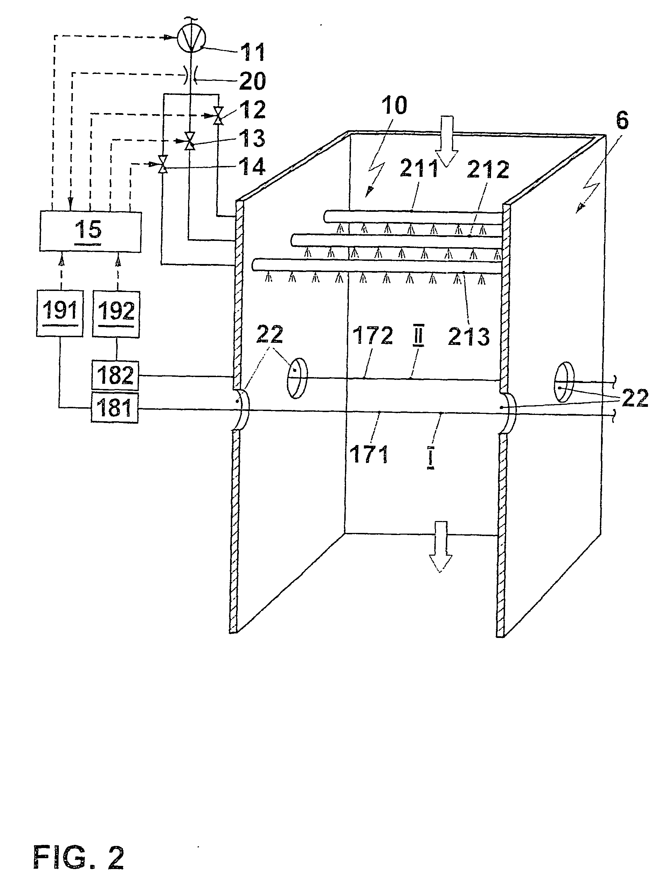

Bei Druckzerstäubern wird die Tropfengrösse in erster Linie durch den Zerstäubungs-Vordruck bestimmt. Diesen zu variieren, ohne dabei gleichzeitig den Massenstrom der Flüssigkeit zu verändern erfordert eine Variation des gesamten freien Strömungsquerschnitts der Einspritzdüsen. Eine Möglichkeit hierzu ist, einzelne Düsen und/oder Gruppen von Düsen selektiv zu- und/oder abzuschalten. Dies ist in Figur 2 dargestellt. Gemäss Figur 2 ist in einem Ansaugkanal 6 eine Eindüsungsvorrichtung 10 angeordnet, welche eine Anzahl von Düsenrohren umfasst, von denen die Düsenrohre 211, 212, 213 dargestellt sind. Die Düsenrohre sind mittels Absperr- und/oder Drosselorgane 12, 13, 14 unabhängig voneinander mit Flüssigkeit beaufschlagbar; die Flüssigkeit wird von einer Pumpe 11 geliefert. Es versteht sich von selbst, dass auch eine Anzahl von Düsenrohren zu einer Gruppe zusammengefasst sein kann, und über eine gemeinsames Absperr- und/oder Drosselorgan gemeinsam angesteuert werden können. Die Durchströmungsrichtung des Kanals 6 ist durch Pfeile, ohne Bezugszeichen, angedeutet. Stromab der Eindüsungsvorrichtung 10 bildet sich ein nicht dargestellter Tröpfchennebel aus. Der Kanal 6 verfügt über stromab der Eindüsungsvorrichtung angeordnete Messtechnik-Zugänge, hier Fenster, 22, über die ein Zugang für vorzugsweise optische Messungen 171, 172 bereitgestellt wird. Die Messzugänge sind in einer Ausführungsform wenigstens zwei bis drei Kanal-Quererstreckungen stromab der Eindüsungsvorrichtung angeordnet, damit der Sprühnebel einen stationären Zustand erreicht hat. Die dargestellte Anordnung ermöglicht es weiterhin, Messwerte an mehreren Stellen über der Quererstreckung des Strömungskanals zu erhalten. Messwertaufnehmer 181 und 182 erfassen die Messdaten, die an Auswerteeinheiten 191 und 192 weitergeleitet werden, die aus den reinen Messsignalen beispielsweise eine Tropfengrösse in einem Messvolumen berechnen. Ebenso kann bei Verwendung einer geeigneten Messtechnik auch die Konzentration, oder wenigstens ein relatives Konzentrationsmass berechnet werden. Grösse und Lage des Messvolumens sind dabei vollkommen von der verwendeten Messmethode abhängig; Durchlichttechniken als integrierende Messverfahren bilden beispielsweise Mittelwerte über den gesamten durchleuchteten Bereich, während Streulichtmethoden zur punktuellen Messung tendieren. Auch mit Bildauswertemethoden können sowohl integrale als auch räumlich aufgelöste Messungen realisiert werden. Ersichtlich ist, dass bei dem dargestellten Beispiel Messwerte in mehreren Positionen I, II, über dem Querschnitt des Strömungskanals aufgenommen werden können. Die in den Auswerteeinheiten berechneten Daten werden an die Steuereinheit 15 weitergegeben. Wenn zum Beispiel festgestellt wird, dass der Tropfendruchmesser ausserhalb des Sollwertintervalls liegt, werden Regeleingriffe ausgelöst. Wenn die gemessene Tropfengrösse über dem Sollwert liegt, wird wenigstens eines der Absperrorgane 12, 13, 14 geschlossen, während in einem weiteren Regelkreis, umfassend die Pumpe 11, die Massenstrom-Messstelle 20, und die Steuereinheit 15, der Massenstrom bei dem jetzt kleineren Durchströmquerschnitt der Eindüsungsvorrichtung konstant auf den Sollwert eingeregelt wird. Dabei steigt selbstverständlich der Zerstäubungs-Vordruck, und damit werden kleinere Tropfen erzeugt. Wenn andererseits die Tropfengrösse unterhalb des Sollwertintervalls liegt, werden zusätzliche Düsengruppen in Betrieb genommen, wodurch der Zerstäubungsvordruck sinkt. Damit wird einer übermässigen Erosion der Düsen und einer übermässigen Belastung der Pumpe 11 vorgebeugt. Eine weitere Möglichkeit bestünde auch darin, zwischen Düsengruppen umzuschalten, welche Düsen aufweisen, die beispielsweise aufgrund der unterschiedlichen Durchmesser zur Erzeugung unterschiedlich grosser Tropfen vorgesehen sind. Somit kann durch eine selektive Auswahl der in Betrieb befindlichen Düsen und/oder Düsengruppen sichergestellt werden, dass beispielsweise an allen Messpositionen gleich grosse Tropfen in gleicher Konzentration vorliegen, oder es kann auf einen anderen Sollwert der Verteilung von Tropfengrösse und Konzentration über dem Querschnitt des Strömungskanals im geschlossenen Regelkreis geregelt werden. So können zur Veränderung der Tropfengrösse auf die beschriebene Weise Düsen und/oder Düsengruppen zu- und/oder abgeschaltet werden, und es kann der Eindüsungsort gegebenenfalls an eine Stelle verlagert werden, wo eine im Vergleich geringe Konzentration der Tropfen gemessen wurde. Es besteht weiterhin die Möglichkeit, in der Eindüsungsvorrichtung Düsen oder Düsengruppen anzuordnen, welche für die Erzeugung unterschiedlich feiner Sprays vorgesehen sind, und die getrennt ansteuerbar sind. Die Erzeugung unterschiedlich feiner Sprays kann bei gleichem Vordruck besonders einfach durch unterschiedliche Düsengeometrien erfolgen. So könnten beispielsweise die Düsen auf den Rohren 211, 212, 213 für unterschiedlich grosse Tropfen vorgesehen sein, so, dass eine Umschaltung zwischen den Düsenrohren eine Variation der Tropfengrösse bewirkt.

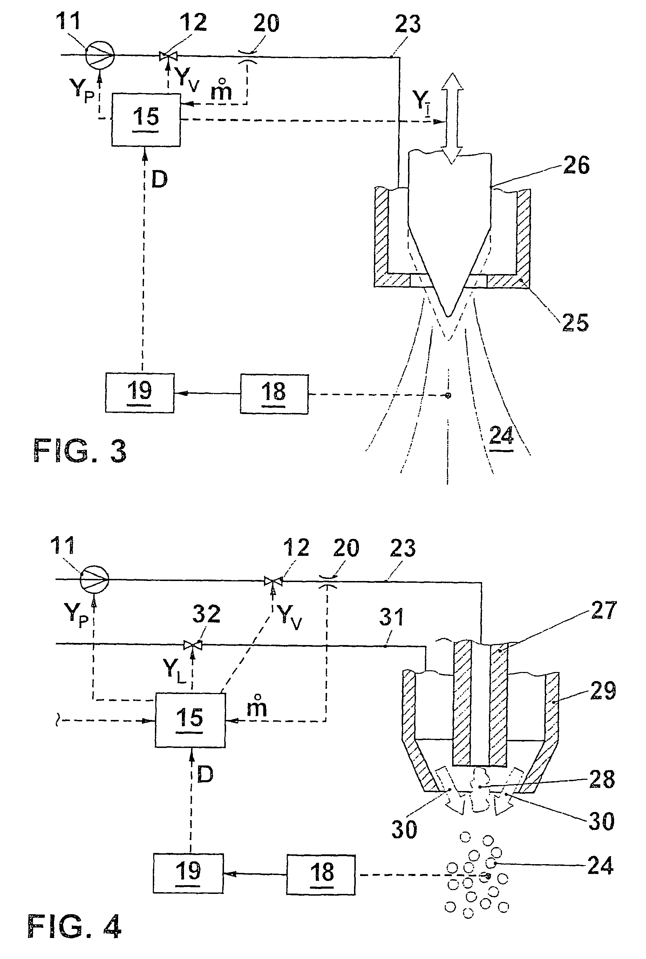

Nachfolgend sind einige bevorzugte Möglichkeiten der Regelung der Tropfengrösse beispielhaft dargestellt. Gemäss Figur 3 wird einer Druckzerstäuberdüse 25 über eine Zuführleitung 23 ein zu zerstäubender Flüssigkeitsmassenstrom zugeführt. Eine Massenstrommessstelle 20 dient zur Bestimmung des Massenstroms ṁ, der von der Steuereinheit 15 verarbeitet, und über Regeleingriffe auf die Pumpe 11 und das Absperr- und Drosselorgan 12 auf einen Sollwert eingeregelt wird. Stromab der Düsenmündung bildet sich ein Sprühnebel 24 aus. Ein Messaufnehmer 18 und eine Auswerteeinheit 19 erfassen die Tropfengrösse an einer geeigneten Position innerhalb des Sprühnebels. Die Tropfengrösse D wird ebenfalls an die Steuereinheit 15 weitergegeben, wo der gemessene Istwert mit einem Sollwert oder einem Sollwert-Intervall verglichen wird. In Abhängigkeit von der Regelabweichung wird eine Steuergrösse Y₁ gebildet, welche über einen nicht dargestellten Aktuator einen konischen Innenkörper 26 der Düse dazu veranlasst, sich axial zu bewegen, und weiter in die Düsenöffnung einzufahren oder einen grösseren Querschnitt freizugeben. Insbesondere wird, wenn der Ist-Wert der Tropfengrösse den Sollwert oder das Sollwert-Intervall übersteigt, der Innenkörper 26 weiter in die Düsenöffnung eingefahren, zu der gestrichelt eingezeichneten Position, um ein feineres Aerosol zu erhalten, und umgekehrt aus der Düsenöffnung ausgefahren um den Istwert der Tropfengrösse zu erhöhen.

Figur 4 illustriert die Regelung einer hilfsmedienunterstützten Zerstäuberdüse, insbesondere einer luftunterstützten Zerstäuberdüse. Im dargestellten Beispiel wird die zu zerstäubende Flüssigkeit unter vergleichsweise geringem Druck durch ein Flüssigkeitsrohr 27 geleitet, und bildet an der Mündung Flüssigkeitssträhnen oder grosse Tropfen 28 aus. Innerhalb eines Mantelrohres 29 wird eine Zerstäubergasströmung 30 geführt, welche die Strähnen 28 zu einem Flüssigkeitsnebel 24 zerstäubt. Ein wesentlicher Vorteil dieser Düsenbauart ist die, dass der Flüssigkeitsmassenstrom unabhängig von der Tropfengrösse einstellbar ist, welche in erster Linie durch die Geschwindigkeit des Zerstäubergases bestimmt wird. Die Flüssigkeit wird über die Zuleitung 23 herangeführt. Eine Massenstrommessstelle 20, die Pumpe11, sowie das Absperr- und Drosselorgan 12 bilden mit der Steuereinheit 15 einen Regelkreis zur Regelung des Flüssigkeitsmassenstroms. Das Zerstäubergas wird über die Leitung 31 herangeführt, und dessen Vordruck, mithin die Geschwindigkeit der Zerstäubergasströmung, kann über das Drosselorgan 32 eingestellt werden. Messaufnehmer 18 und Analyseeinheit 19 bestimmen wieder die Tropfengrösse D des Aerosols, welche in der Steuereinheit 15 mit den Sollwerten verglichen wird. Abhängig von der Regelabweichung wird eine Steuergrösse Y_{L} gebildet, welche auf das Drosselorgan 32 eingreift. Insbesondere wird das Drosselorgan dann, wenn die Ist-Tropfengrösse grösser als der Sollwert ist, weiter geöffnet, wodurch der Vordruck des Zerstäubergases erhöht wird, und umgekehrt wird es geschlossen wenn der Istwert der gemessenen Tropfengrösse kleiner als der Sollwert ist. Auf diese Weise wird auch die erzeugte Tropfengrösse im geschlossenen Regelkreis geregelt.

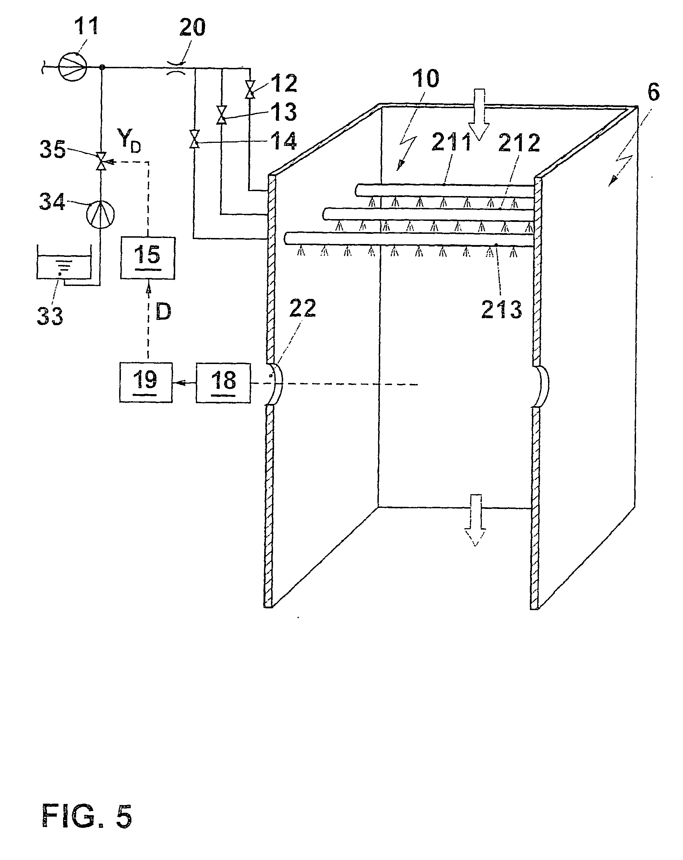

In einer weiteren, in Figur 5 dargestellten Ausführungsform der Erfindung erfolgt die Veränderung der Tropfengrösse oder des Tropfengrössenspektrums, indem aus einem Behälter 33 gezielt eine Menge eines Additivs in die Flüssigkeitszuführleitung zugemischt wird, welches die Oberflächenspannung der zu zerstäubenden Flüssigkeit verändert. So kann beispielsweise zu zerstäubendem Wasser gezielt eine Menge eines Detergens zugemischt werden, um die Oberflächenspannung zu vermindern und somit kleinere Tropfen zu erhalten. Das Additiv wird über die Pumpe 34 gefördert und der Massenstrom durch das Stellorgan 35 gesteuert. Ein Messaufnehmer 18 und eine Analyseeinheit 19 bestimmen die Tropfengrösse D im Strömungskanal. Steuereinheit 15 vergleicht Istwert und Sollwert der Tropfengrösse, und bildet in Abhängigkeit von der Regelabweichung die Steuergrösse Y_{D}, welche auf das Drosselorgan 35 eingreift, und somit die Additivzumischung regelt. Dabei erfolgt diese Steuerung so, dass, wenn der Tropfengrösse-Istwert oberhalb des Sollwertes liegt, die Oberflächenspannung vermindert wird, und, wenn der Istwert unter dem Sollwert liegt die Oberflächenspannung vergrössert wird.

Allen oben gezeigten Ausführungsbeispielen ist gemein, dass die Flüssigkeitseindüsung mit wenigstens einer gemessenen Eigenschaft des erzeugten Sprays, insbesondere der Tropfengrösse, als Leitgrösse im geschlossenen Regelkreis betrieben wird.

Im Lichte der oben gemachten Ausführungsbeispiele eröffnen sich dem Fachmann ohne weiteres auch weitere unter den Umfang der Patentansprüche fallende mögliche Ausführungsformen der Erfindung. Insbesondere ist die Erfindung nicht auf die Verwendung in Gasturbogruppen beschränkt. Als Messverfahren eignen sich auch Bildauswerteverfahren, welche bei Anwendung von Stereoskopie oder bei selektiver Beleuchtung bestimmter Bereiche ebenfalls eine lokale Auflösung ermöglichen.

Die Erfindung kann an sich auch genutzt werden, wenn eben keine Flüssigkeit oder nur eine begrenzte Menge an Flüssigkeitstropfen in die Kraftmaschine, beispielsweise den Verdichter einer Gasturbogruppe, eindringen soll. Die Messvorrichtung wird dann mit Vorteil nur wenig stromauf des Einlasses angeordnet, und die Tropfenkonzentration gemessen. Wenn diese einen Grenzwert überschreitet, wird der eingedüste Massenstrom reduziert.

### Bezugszeichenliste

- 1: Gasturbogruppe
- 2: Verdichter
- 3: Brennkammer
- 4: Turbine
- 5: Leistungsverbraucher, Generator
- 6: Ansaugkanal
- 7: Eintrittslamellen
- 8: Luftfilter
- 9: Schalldämpfer
- 10: Eindüsungsvorrichtung
- 11: Pumpe
- 12: Absperr- und Drosselorgan
- 13: Absperr- und Drosselorgan
- 14: Absperr- und Drosselorgan
- 15: Steuereinheit
- 16: Lichtquelle
- 17: Messstrahl
- 18: Messwertaufnehmer
- 19: Analyseeinheit
- 20: Massenstrom-Messstelle
- 21: Druck-Messtellen
- 22: Messtechnikzugang
- 23: Flüssigkeitszuführleitung
- 24: Tropfennebel, Spray, Aerosol, Sprühnebel
- 25: Düse
- 26: Innenkörper
- 27: Flüssigkeitsrohr
- 28: Flüssigkeitssträhnen
- 29: Mantelrohr
- 30: Zerstäubergas
- 31: Gszuführleitung
- 32: Absperr- und Drosselorgan
- 33: Additiv, Additivtank
- 34: Additivpumpe
- 35: Absperr- und Drosselorgan
- 171: Messstrahl
- 172: Messstrahl
- 181: Messaufnehmer
- 182: Messaufnehmer
- 191: Auswerteeinheit
- 192: Auswerteeinheit
- 211: Düsenrohr, Düsengruppe
- 212: Düsenrohr, Düsengruppe
- 213: Düsenrohr, Düsengruppe
- I: Messposition
- II: Messposition
- ṁ: Massenstrom
- p: Druck
- C: Tropfenkonzentration
- D: Tropfendurchmesser
- I: Messsignal
- X: Leitgrösse
- Y_{D}: Stellgrösse
- Y_{P}: Stellgrösse
- Y_{V}: Stellgrösse

## Patentansprüche

1. Verfahren zum Betrieb einer luftatmenden Kraftmaschine, (1) umfassend die Schritte:
einen Flüssigkeitsmassenstrom zerstäubt in einen Luftansaugkanal (6) der Kraftmaschine (1) einzudüsen;
mittels einer stromab der Stelle der Eindüsung (10) in und/oder am Ansaugkanal angeordneten Messvorrichtung (18) wenigstens zu ermitteln:
die Grösse der eingedüsten Flüssigkeitstropfen (D), die Konzentration der eingedüsten Flüssigkeitstropfen (C), oder beides;
Eingabe der Messwerte in ein Regelungssystem (15) der verwendeten Eindüsungsvorrichtung;
Eingriffe auf eine Steuerung der verwendeten Eindüsungsvorrichtung in Abhängigkeit von den Messwerten vorzunehmen.

2. Verfahren nach Anspruch 1, **dadurch gekennzeichnet, dass** wenigstens ein gemessener Ist-Wert durch geeignete Regeleingriffe auf die Steuerung der Flüssigkeitseindüsungsvorrichtung auf einen Sollwert und/oder in ein Sollwertintervall eingeregelt wird.

3. Verfahren nach Anspruch 2, **dadurch gekennzeichnet, dass** der Sollwert und/oder das Sollwertintervall variabel festgelegt werden.

4. Verfahren nach einem der vorstehenden Ansprüche, **dadurch gekennzeichnet, dass** in Abhängigkeit von den Messwerten der Vordruck (p) der Flüssigkeit verändert wird, und insbesondere bei einer negativen Sollwert-Istwert-Abweichung der gemessenen Tropfengrösse der Vordruck erhöht wird und/oder bei einer positiven Sollwert-Istwert-Abweichung der Tropfengrösse der Vordruck vermindert wird.

5. Verfahren nach einem der vorstehenden Ansprüche, **dadurch gekennzeichnet, dass** in Abhängigkeit von den Messwerten der Druck eines zur Zerstäubung der Flüssigkeit (28) verwendeten Gases (30) verändert wird, und insbesondere bei einer negativen Sollwert-Istwert-Abweichung der Tropfengrösse erhöht und/oder bei einer positiven Sollwert-Istwert-Abweichung der Tropfengrösse vermindert wird.

6. Verfahren nach einem der vorstehenden Ansprüche, **dadurch gekennzeichnet, dass** in Abhängigkeit von den Messwerten die Geometrie von zur Zerstäubung verwendeten Düsen (25) verändert wird, wobei insbesondere der Querschnitt der Zerstäuberöffnung der Düsen bei einer negativen Sollwert-Istwert-Abweichung der Tropfengrösse verkleinert und bei einer positiven Sollwert-Istwert-Abweichung der Tropfengrösse vergrössert wird.

7. Verfahren nach Anspruch 6, **dadurch gekennzeichnet, dass** zur Verstellung des Durchtrittsquerschnitts konische Innenkörper (26) unterschiedlich weit in die Zerstäuberöffnung eingefahren werden.

8. Verfahren nach einem der vorstehenden Ansprüche, **dadurch gekennzeichnet, dass** in Abhängigkeit von den Messwerten Düsen und/oder Düsengruppen (211, 212, 213) selektiv zu- und/oder abgeschaltet werden.

9. Verfahren nach Anspruch 8, **dadurch gekennzeichnet, dass** bei einer Regelabweichung der gemessenen Tropfengrösse Düsen und/oder Düsengruppen selektiv zu- und/oder abgeschaltet werden, wobei insbesondere bei einer negativen Sollwert-Istwert-Abweichung der Tropfengrösse die Anzahl der Düsen verringert wird, und/oder bei einer positiven Sollwert-Istwert-Abweichung der Tropfengrössen Düsen und/oder Düsengruppen selektiv zugeschaltet werden.

10. Verfahren nach einem der Ansprüche 8 oder 9, **dadurch gekennzeichnet, dass** bei einer Regelabweichung der gemessenen Tropfengrösse eine Umschaltung zwischen Düsen und/oder Düsengruppen mit unterschiedlichen Zerstäubereigenschaften erfolgt, wobei insbesondere bei einer negativen Sollwert-Istwert-Abweichung der Tropfengrösse eine Umschaltung auf Düsen für feinere Zerstäubung erfolgt, und/oder bei einer positiven Sollwert-Istwert-Abweichung der Tropfengrössen eine Umschaltung auf Düsen für eine weniger feine Zerstäubung erfolgt.

11. Verfahren nach einem der Ansprüche 8 bis 10, **dadurch gekennzeichnet, dass** an mehreren Stellen (I, II) im Ansaugkanal die Tropfenkonzentration gemessen wird, und an unterschiedlichen Positionen angeordnete Düsen und/oder Düsengruppen (211, 212, 213) zu- und/oder abgeschaltet werden, um ein vorgegebenes Soll-Konzentrationsprofil, insbesondere eine wenigstens näherungsweise Gleichverteilung der Tropfen über dem Querschnitt des Ansaugkanals, zu erreichen.

12. Verfahren nach einem der vorstehenden Ansprüche, **dadurch gekennzeichnet, dass** in Abhängigkeit von der gemessenen Tropfengrösse der einzudüsenden Flüssigkeit vor der Eindüsung Additive (33) zur Beeinflussung der Oberflächenspannung zudosiert werden, und insbesondere bei einer negativen Sollwert-Istwert-Abweichung der Tropfengrösse die Dosierung so erfolgt, dass die Oberflächenspannung sinkt, und bei einer positiven Sollwert-Istwert-Abweichung der Tropfengrösse die Dosierung so erfolgt, dass die Oberflächenspannung ansteigt

13. Verfahren nach einem der vorstehenden Ansprüche, **dadurch gekennzeichnet, dass** bei Überschreiten eines Schwellenwertes der Tropfengrösse und/oder der Abweichung eines gemessenen Konzentrationsprofils über dem Querschnitt des Ansaugkanals eine Abschaltung der Flüssigkeitseindüsung erfolgt

14. Verfahren nach einem der vorstehenden Ansprüche, **dadurch gekennzeichnet, dass** Messwerte an mehreren Messpositionen (I, II) im Ansaugkanal, insbesondere über dessen Querschnitt verteilt, aufgenommen werden.

15. Verfahren nach einem der vorstehenden Ansprüche, **dadurch gekennzeichnet, dass** die Messwerte mit einem integrierenden Messverfahren aufgenommen werden, welches Mittelwerte über ein bestimmtes Messfeld liefert.

16. Verfahren nach Anspruch 15, **dadurch gekennzeichnet, dass** mehrere Messwerte simultan aufgenommen werden, und unter Einsatz tomographischer Methoden eine lokale Auflösung der Messwerte rekonstruiert wird.

17. Verfahren nach einem der vorstehenden Ansprüche, **dadurch gekennzeichnet, dass** ein optisches Messverfahren, insbesondere eine Streulicht und/oder eine Durchlichtmessung, verwendet wird.

18. Verfahren nach einem der vorstehenden Ansprüche, **dadurch gekennzeichnet, dass** ein Bildauswerteverfahren verwendet wird.

19. Verfahren nach einem der vorstehenden Ansprüche, **dadurch gekennzeichnet, dass** der eingedüste Flüssigkeitsmassenstrom während des Eingriffs auf die Steuerung konstantgehalten wird.

## Claims

1. Method for operating an air-breathing engine (1), comprising the steps of
injecting a mass flow of liquid in atomized form into an air intake duct (6) of the engine (1);
using a measuring apparatus (18) arranged in and/or on the intake duct downstream of the location of the injection (10) to determine at least:
the size of the injected drops of liquid (D), the concentration of the injected drops of liquid (C), or both;
inputting the measured values into a control system (15) of the injection apparatus used;
carrying out actions on a control of the injection apparatus used as a function of the measured values.

2. Method according to Claim 1, **characterized in that** at least one measured actual value is adjusted to a desired value and/or to within a desired value range by suitable control actions on the control of the liquid injection apparatus.

3. Method according to Claim 2, **characterized in that** the desired value and/or the desired value range are defined so as to variable.

4. Method according to one of the preceding claims, **characterized in that** the admission pressure (p) of the liquid is altered as a function of the measured values, and in particular the admission pressure is increased in the event of a negative desired value/actual value deviation in the measured drop size and/or the admission pressure is reduced in the event of a positive desired value/actual value deviation in the drop size.

5. Method according to one of the preceding claims, **characterized in that** the pressure of a gas (30) used to atomize the liquid (28) is altered as a function of the measured values, and in particular is increased in the event of a negative desired value/actual value deviation in the drop size and/or reduced in the event of a positive desired value/actual value deviation in the drop size.

6. Method according to one of the preceding claims, **characterized in that** the geometry of nozzles (25) used for the atomization is altered as a function of the measured values, with in particular the cross section of the atomizer opening of the nozzles being reduced in size in the event of a negative desired value/actual value deviation in the drop size and increased in size in the event of a positive desired value/actual value deviation in the drop size.

7. Method according to Claim 6, **characterized in that** to adjust the passage cross section conical inner bodies (26) are introduced to a different distance into the atomizer opening.

8. Method according to one of the preceding claims, **characterized in that** nozzles and/or nozzle groups (211, 212, 213) are selectively switched on and/or off as a function of the measured values.

9. Method according to Claim 8, **characterized in that** in the event of a control deviation in the measured drop size, nozzles and/or nozzle groups are selectively switched on and/or off, with in particular the number of nozzles being reduced in the event of a negative desired value/actual value deviation in the drop size and/or nozzles and/or nozzle groups being selectively switched on in the event of a positive desired value/actual value deviation in the drop size.

10. Method according to one of Claims 8 and 9, **characterized in that** in the event of a control deviation in the measured drop size, a switching takes place between nozzles and/or nozzle groups with different atomizer properties, with in particular a switch to nozzles for finer atomization taking place in particular in the event of a negative desired value/actual value deviation in the drop size and/or a switch to nozzles for less fine atomization taking place in the event of a positive desired value/actual value deviation in the drop sizes.

11. Method according to one of Claims 8 to 10, **characterized in that** the drop concentration is measured at a plurality of locations (I, II) in the intake duct, and nozzles and/or nozzle groups (211, 212, 213) arranged at different positions are switched on and/or off in order to achieve a predetermined desired concentration profile, in particular an at least approximately even distribution of the drops over the cross section of the intake duct.

12. Method according to one of the preceding claims, **characterized in that** additives (33) for influencing the surface tension are metered in prior to the injection as a function of the measured drop size of the liquid to be injected, and in particular the metering takes place in such a way that the surface tension drops in the event of a negative desired value/actual value deviation in the drop size and the metering takes place in such a way that the surface tension rises in the event of a positive desired value/actual value deviation in the drop size.

13. Method according to one of the preceding claims, **characterized in that** the liquid injection is switched off in the event of a threshold value for the drop size being exceeded and/or in the event of an excessive deviation in a measured concentration profile over the cross section of the intake duct.

14. Method according to one of the preceding claims, **characterized in that** measured values are recorded at a plurality of measurement positions (I, II) in the intake duct, in particular over its cross section.

15. Method according to one of the preceding claims, **characterized in that** the measured values are recorded using an integrating measurement method which delivers mean values over a certain measurement field.

16. Method according to Claim 15, **characterized in that** a plurality of measured values are recorded simultaneously, and a local resolution of the measured values is reconstructed using tomographic methods.

17. Method according to one of the preceding claims, **characterized in that** an optical measurement method, in particular a scattered light and/or transmitted light measurement, is used.

18. Method according to one of the preceding claims, **characterized in that** an image evaluation method is used.

19. Method according to one of the preceding claims, **characterized in that** the injected mass flow of liquid is kept constant during the action on the control.

## Revendications

1. Procédé de conduite d'une machine motrice (1) consommant de l'air, le procédé comportant les étapes qui consistent à _{:}
injecter dans un canal (6) d'aspiration d'air de la machine à moteur (1) un écoulement massique de liquide pulvérisé,
au moyen d'un dispositif de mesure (18) disposé en aval de l'emplacement d'injection (10) dans et/ou le canal d'aspiration, déterminer au moins :
la taille des gouttes de liquide (2) injectées, la concentration des gouttes de liquide injectées (C) ou les deux,
introduire les valeurs de mesure dans un système (15) qui régule le dispositif d'injection utilisé et
en fonction des valeurs de mesure, entreprendre des interventions sur la commande du dispositif d'injection utilisé.

2. Procédé selon la revendication 1, **caractérisé en ce qu'**au moins une valeur effective mesurée est régulée à une valeur de consigne et/ou dans un intervalle de valeurs de consigne par des interventions appropriées de régulation sur la commande du dispositif d'injection de liquide.

3. Procédé selon la revendication 2, **caractérisé en ce que** la valeur de consigne et/ou l'intervalle de valeurs de consigne peuvent être définis de manière variable.

4. Procédé selon l'une des revendications précédentes, **caractérisé en ce que** la pression (p) du liquide en amont est modifiée en fonction des valeurs de mesure, et en particulier **en ce que** la pression en amont est augmentée au cas où l'écart entre la valeur de consigne et la valeur effective de la taille mesurée des gouttes est négatif et/ou la pression amont est diminuée lorsque l'écart entre la valeur de consigne et la valeur effective de la taille des gouttes est positif.

5. Procédé selon l'une des revendications précédentes, **caractérisé en ce que** la pression d'un gaz (30) utilisé pour pulvériser le liquide (28) est modifiée en fonction des valeurs de mesure, et en particulier est augmentée lorsque l'écart entre la valeur de consigne et la valeur effective de la taille des gouttes est négatif et est diminuée lorsque l'écart entre la valeur de consigne et la valeur effective de la taille des gouttes est positif.

6. Procédé selon l'une des revendications précédentes, **caractérisé en ce que** la géométrie des tuyères (25) utilisées pour la pulvérisation est modifiée et en particulier **en ce que** la section transversale de l'ouverture de pulvérisation des tuyères est diminuée lorsque l'écart entre la valeur de consigne et la valeur effective de la taille des gouttes est négatif et est augmentée lorsque l'écart entre la valeur de consigne et la valeur effective de la taille des gouttes est positif.

7. Procédé selon la revendication 6, **caractérisé en ce que** pour modifier la section transversale de passage, des corps intérieurs coniques (26) sont insérés à différentes profondeurs dans l'ouverture de pulvérisation.

8. Procédé selon l'une des revendications précédentes, **caractérisé en ce que** des tuyères et/ou des groupes de tuyères (211, 212, 213) sont branchés et/ou débranchés sélectivement en fonction des valeurs de mesure.

9. Procédé selon la revendication 8, **caractérisé en ce qu'**en cas d'écart de régulation sur la taille des gouttes mesurée, des tuyères et/ou des groupes de tuyères sont branchées et/ou débranchées sélectivement, le nombre des tuyères étant diminué lorsque l'écart entre la valeur de consigne et la valeur effective de la taille des gouttes est négatif et des tuyères et/ou des groupes de tuyères sont branchés sélectivement lorsque l'écart entre la valeur de consigne et la valeur effective de la taille des gouttes est positif.

10. Procédé selon l'une des revendications 8 ou 9, **caractérisé en ce qu'**en cas d'écart de régulation de la taille des gouttes mesurées, on bascule entre des tuyères et/ou des groupes de tuyères qui présentent différentes propriétés de pulvérisation, le basculement s'effectuant sur des tuyères de pulvérisation plus fines lorsque l'écart entre la valeur de consigne et la valeur effective de la taille des gouttes est négatif et sur des tuyères de pulvérisation moins fine lorsque l'écart entre la valeur de consigne et la valeur effective de la taille des gouttes est positif.

11. Procédé selon l'une des revendications 8 à 10, **caractérisé en ce que** la concentration en gouttes est mesurée en plusieurs emplacements (I, II) du canal d'aspiration et **en ce que** des tuyères et/ou groupes de tuyères (211, 212, 213) disposés en différentes positions sont branchés et/ou débranchés pour obtenir un profil prédéterminé de consigne de concentration et en particulier une répartition au moins approximativement uniforme des gouttes sur la section transversale du canal d'aspiration.

12. Procédé selon l'une des revendications précédentes, **caractérisé en ce qu'**en fonction de la taille des gouttes mesurées, des additifs (33) qui agissent sur la tension de surface sont ajoutés au liquide à injecter en amont de l'injection et **en ce que** le dosage s'effectue de telle sorte que la tension de surface diminue lorsque l'écart entre la valeur de consigne et la valeur effective de la taille des gouttes est négatif et que la tension superficielle augmente lorsque l'écart entre la valeur de consigne et la valeur effective de la taille des gouttes est positif.

13. Procédé selon l'une des revendications précédentes, **caractérisé en ce que** l'injection de liquide est débranchée lorsqu'une valeur de seuil de la taille des gouttes et/ou de l'écart d'un profil de concentration mesuré sur la section transversale du canal d'aspiration est dépassée.

14. Procédé selon l'une des revendications précédentes, **caractérisé en ce que** des valeurs de mesure sont enregistrées en plusieurs positions de mesure (I, II) dans le canal d'aspiration, en particulier réparties sur sa section transversale.

15. Procédé selon l'une des revendications précédentes, **caractérisé en ce que** les valeurs de mesure sont enregistrées à l'aide d'un procédé de mesure intégratif qui délivre des valeurs moyennes sur un champ de mesure défini.

16. Procédé selon la revendication 15, **caractérisé en ce que** plusieurs valeurs de mesure sont enregistrées simultanément et la résolution locale des valeurs de mesure est reconstruite en recourant à des méthodes tomographiques.

17. Procédé selon l'une des revendications précédentes, **caractérisé en ce qu'**un procédé de mesure optique et en particulier une mesure de la lumière diffuse et/ou de la lumière passante sont utilisés.

18. Procédé selon l'une des revendications précédentes, **caractérisé en ce qu'**il utilise un procédé d'évaluation d'image.

19. Procédé selon l'une des revendications précédentes, **caractérisé en ce que** l'écoulement massique de liquide injecté est maintenu constant pendant l'intervention sur la commande.
